# FASCICULE DE BREVET EUROPEEN

(11) **EP 2 293 429 B1**
(45) Date de publication et mention de la délivrance du brevet: **27.02.2019**
(21) Numéro de dépôt: 10174432.4
(22) Date de dépôt: 27.08.2010
(51) Int. Cl.: H02P 6/16, B64C 13/18, B64D 45/00

(54) **DISPOSITIF SÉCURISÉ DE SURVEILLANCE ET DE COMMANDE POUR ACTIONNEUR DE PILOTAGE D'UN AÉRONEF**
GESICHERTE VORRICHTUNG ZUR ÜBERWACHUNG UND STEUERUNG FÜR EIN FLUGZEUGSTEUERUNG-STELLGLIED
SECURED SURVEILLANCE AND CONTROL DEVICE FOR AN AIRCRAFT HANDLING ACTUATOR

(30) Priorité: 08.09.2009 FR 0904272
(43) Date de publication de la demande: 09.03.2011
(73) Titulaire: THALES, 92400 Courbevoie (FR)
(72) Inventeur: Lebrun, Jean-Louis, 92160, ANTONY (FR)
(74) Mandataire: Lucas, Laurent Jacques

(56) Documents cités:
- EP-A2- 1 036 734
- FR-A1- 2 694 822
- US-A- 4 095 763
- US-B1- 6 791 219

## Description

La présente invention concerne un dispositif sécurisé de surveillance et de commande pour actionneur de pilotage d'un aéronef. Elle s'applique notamment au domaine de l'aéronautique, et plus particulièrement aux actionneurs de pilotage d'avions ou d'hélicoptères.

Le pilotage d'un aéronef se réalise par l'actionnement de moyens de pilotage, de manière manuelle par un pilote, ou bien de manière automatique ou semi-automatique par l'intermédiaire d'un dispositif de pilotage automatique. Ainsi un dispositif de pilotage automatique peut permettre une facilitation du contrôle de l'aéronef par le pilote, ainsi qu'une meilleure stabilité et sécurité de vol, et peut également asservir un ou plusieurs paramètres de vol, tels que l'altitude, la vitesse verticale, la vitesse longitudinale, le cap, etc., à une ou plusieurs valeurs de consignes saisies par le pilote.

L'actionnement des moyens de pilotage agit sur des organes de l'aéronef permettant une modification de sa dynamique de vol, d'une manière directe via une chaîne de transmission ou "tringlerie", ou bien par l'action d'une tringlerie sur des organes de puissance tels que des vannes hydrauliques, ce dernier cas étant le plus fréquent, notamment dans des aéronefs de grandes dimensions et les aéronefs les plus élaborés. Par exemple, dans un hélicoptère, un déplacement latéral ou longitudinal du manche cyclique permet respectivement une action sur l'axe latéral ou longitudinal de celui-ci, c'est-à-dire sur la commande en tangage et en roulis, en modifiant l'incidence des pales du rotor principal. Une action sur le palonnier permet un contrôle en lacet de l'hélicoptère, en modifiant l'incidence des pales du rotor de queue. La commande d'incidence des pales des différents rotors est modifiée par des actionneurs mécaniques, par exemple électromécaniques ou hydromécaniques. D'une manière similaire, l'incidence de gouvernes de profondeur ou de direction d'un avion, ainsi que l'incidence d'ailerons et de volets, peut être modifiée par des actionneurs mécaniques. Ceux-ci peuvent être des actionneurs linéaires, ou bien des actionneurs rotatifs.

Il existe en outre différents types d'actionneurs mécaniques, notamment des actionneurs dits "actionneurs de trim" et des actionneurs dits "actionneurs série". Les "actionneurs série", également désignés "vérins série", sont placés en série avec les commande de vol, et comportent un corps et un axe de sortie. Les actionneurs série ont typiquement un temps de réponse court et une autorité réduite. Ceux-ci sont habituellement du type vis sans fin / écrou et sont commandés par un moteur électrique. Par exemple, pour un actionneur série linéaire, une commande électrique entraîne une rotation de l'axe du moteur électrique, et le mouvement de rotation est transformé en mouvement de translation de l'axe de sortie de l'actionneur par rapport à son corps. Les actionneurs série sont dits mécaniquement irréversibles, c'est-à-dire qu'ils ne se déforment que lorsqu'une commande électrique leur est appliquée. En particulier, lorsque l'équipement de pilotage automatique est hors fonctionnement, les actionneurs série sont sans effet sur la conduite de l'aéronef.

Pour des raisons de sécurité, il est habituel d'utiliser une redondance des actionneurs couplés aux équipements de pilotage automatique. La plupart des équipements d'aéronefs connus de l'état de la technique ont recours à des actionneurs de type "esclaves", c'est-à-dire possédant une intelligence nulle ou limitée. Ceux-ci se contentent en effet de renvoyer sous une forme brute des informations de position ou de vitesse, par l'intermédiaire de capteurs de type potentiomètre, résolveur, capteurs passifs de déplacements linéaires communément désignés par le sigle LVDT de l'expression anglo-saxonne "Linear Variable Differential Transformer", ou encore capteurs passifs de déplacements en rotations communément désignés par le sigle RVDT de l'expression anglo-saxonne "Rotary Variable Differential Transformer". Ces actionneurs sont habituellement alimentés ou excités par des dispositifs extérieurs. Le diagnostic de leur bon fonctionnement se réduit généralement à l'envoi d'une variable booléenne de synthèse de bon fonctionnement en direction d'un module de surveillance générale associé au dispositif de pilote automatique.

Dans un souci d'amélioration continue de la sécurité des aéronefs, dont les caractéristiques de pilotage sont sans cesse accrues, on assiste à une décentralisation de l'intelligence de surveillance générale, au profit des organes actionneurs eux-mêmes. Notamment, l'auto-surveillance et l'autodiagnostic d'un actionneur par rapport aux commandes de pilotage qu'il reçoit doit en particulier lui permettre de réagir plus tôt (par exemple par une auto-inhibition) et éviter de placer l'aéronef dans une situation de pilotage catastrophique. Des gains de temps de réaction de quelques dizaines à quelques centaines de millisecondes peuvent ainsi être recherchés, par rapport à une surveillance classique centralisée sur une chaîne de pilotage.

En conséquence, si l'on déporte une certaine intelligence dans l'actionneur, on déporte du même coup certaines contraintes de sécurité de fonctionnement concentrées au niveau du système de pilote automatique, notamment la gestion des pannes catastrophiques. Ces contraintes de sécurité induites sur l'actionneur devenu plus autonome, conduisent à mettre en oeuvre des principes d'architecture et de surveillance particulières, adaptées à satisfaire les diverses contraintes de sécurité. En outre, il est désirable que ces architectures, associées à plusieurs actionneurs dans un aéronef, soient optimisées en termes d'intégration et de coût.

Le document D1 US 4095763 décrit un dispositif de surveillance et de commande pour actionneur d'aéronef, comprenant un module de commande et un module de surveillance. Le premier capteur de position du module de commande fournit des informations relatives à la position de l'actionneur. Le deuxième capteur de position du module de surveillance fournit également des informations relatives à la position de l'actionneur.

Le document D2 US 6791219 décrit un dispositif de commande à logique programmable pour actionneur mu par un moteur électrique sans balais.

Un but de la présente invention est de pallier les inconvénients précités, en proposant une architecture de surveillance et de sécurisation pour un actionneur d'aéronef, permettant le contrôle et la surveillance de l'actionneur, tout en satisfaisant les contraintes de sécurité requises.

Un avantage de la présente invention est que l'architecture proposée peut être mise en oeuvre dans un encombrement réduit.

Un autre avantage de la présente invention est que l'architecture proposée peut être réalisée à moindre coût.

Un autre avantage de la présente invention est qu'elle permet une réduction substantielle de la charge processeur du dispositif de pilotage automatique de l'aéronef dans lequel elle est mise en oeuvre.

A cet effet, l'invention a pour objet un dispositif de surveillance et de commande pour actionneur d'aéronef, caractérisé en ce qu'il comprend :
- un module de commande, délivrant des signaux de commande de l'actionneur et des signaux de position de l'actionneur déterminés respectivement en fonction de messages de commande reçus d'un système de gestion de pilotage de l'aéronef, et d'au moins un premier capteur de position fournissant des informations relatives à la position de l'actionneur,
- un module de surveillance, délivrant des signaux de position de l'actionneur et recevant simultanément les messages de commande reçus du système de gestion de pilotage de l'aéronef, et des informations relatives à la position de l'actionneur fournies par au moins un second capteur de position,
lesdits modules de commande et de surveillance étant aptes à apprécier la cohérence des signaux y traités et à commander en conséquence un module d'alimentation et d'inhibition de l'actionneur.

Dans un mode de réalisation de l'invention, le dispositif de surveillance et de commande peut être caractérisé en ce que l'actionneur est mu par un moteur électrique sans balais, le premier capteur de position étant un capteur de type à effet Hall fournissant une information sur le positionnement en rotation du rotor du moteur, la position de l'actionneur étant déterminée par le module de commande sur la base d'une donnée de position initiale fournie par le module de surveillance.

Dans un mode de réalisation de l'invention, le dispositif de surveillance et de commande peut être caractérisé en ce que la donnée de position initiale est fournie au module de commande à la mise en route du dispositif de surveillance et de commande pour actionneur.

Dans un mode de réalisation de l'invention, le dispositif de surveillance et de commande peut être caractérisé en ce que le second capteur de position est un capteur de position de l'actionneur.

Dans un mode de réalisation de l'invention, le dispositif de surveillance et de commande peut être caractérisé en ce que le module de commande comprend :
- un module d'actionnement commandant l'actionneur via le module d'alimentation et d'inhibition,
- un premier module de traitement de position traitant les données provenant du premier capteur de position et générant et envoyant au module d'actionnement, un premier signal représentatif de la position de l'actionneur.

Dans un mode de réalisation de l'invention, le dispositif de surveillance et de commande peut être caractérisé en ce que le module de commande comprend un premier module de simulation recevant les messages de commande reçus du système de gestion de pilotage de l'aéronef, et simulant le comportement de l'actionneur, générant un premier signal de position virtuelle de l'actionneur.

Dans un mode de réalisation de l'invention, le dispositif de surveillance et de commande peut être caractérisé en ce que le module de surveillance comprend un second module de traitement de position traitant les données provenant du second capteur de position et générant un second signal représentatif de la position de l'actionneur.

Dans un mode de réalisation de l'invention, le dispositif de surveillance et de commande peut être caractérisé en ce que le module de surveillance comprend un second module de simulation recevant les messages de commande reçus du système de gestion de pilotage de l'aéronef, et simulant le comportement de l'actionneur, générant un second signal de position virtuelle de l'actionneur.

Dans un mode de réalisation de l'invention, le dispositif de surveillance et de commande peut être caractérisé en ce qu'il comprend un premier comparateur dont la sortie passe d'un niveau logique nominal à l'autre si le premier signal de position virtuelle de l'actionneur diffère du premier signal représentatif de la position de l'actionneur d'une valeur supérieure à un premier seuil déterminé.

Dans un mode de réalisation de l'invention, le dispositif de surveillance et de commande peut être caractérisé en ce qu'il comprend un deuxième comparateur dont la sortie passe d'un niveau logique nominal à l'autre si un signal de commande reçu par le module de commande diffère du signal de commande reçu simultanément par le module de surveillance d'une valeur supérieure à un deuxième seuil déterminé.

Dans un mode de réalisation de l'invention, le dispositif de surveillance et de commande peut être caractérisé en ce qu'il comprend un troisième comparateur dont la sortie passe d'un niveau logique nominal à l'autre si le second signal de position virtuelle de l'actionneur diffère du second signal représentatif de la position de l'actionneur d'une valeur supérieure à un troisième seuil déterminé.

Dans un mode de réalisation de l'invention, le dispositif de surveillance et de commande peut être caractérisé en ce qu'il comprend un quatrième comparateur dont la sortie passe d'un niveau logique nominal à l'autre si le premier signal représentatif de la position de l'actionneur diffère du second signal représentatif de la position de l'actionneur d'une valeur supérieure à un quatrième seuil déterminé.

Dans un mode de réalisation de l'invention, ledit module d'alimentation et d'inhibition peut comprendre :
- un module d'alimentation alimenté par une tension d'alimentation principale, et traitant le signal d'alimentation pour générer les signaux d'alimentation des différents modules formant le dispositif de surveillance et de commande ;
- un module de répartition de puissance, générant à partir des informations fournies par le module d'actionnement un signal modulé pour la commande du moteur, et assurant le gel ou l'inhibition de l'actionneur en cas de défaillance, détectée à partir d'un signal logique synthétique dépendant au moins du niveau logique des sorties des comparateurs.

Dans un mode de réalisation de l'invention, ledit module d'alimentation et d'inhibition peut comprendre sur la ligne d'alimentation principale, un rupteur de puissance, un premier dispositif de mesure de courant, en série duquel est disposé un pont de puissance, le pont de puissance comprenant un commutateur supérieur en série avec un commutateur inférieur et générant le signal modulé de commande du moteur, le rupteur de puissance et lesdits commutateurs étant commandés par ledit signal logique synthétique.

Dans un mode de réalisation de l'invention, la commande du rupteur de puissance, des commutateurs et du moteur peut être réalisée par l'intermédiaire d'aiguilleurs logiques :
- un premier aiguilleur logique commandant le rupteur de puissance, et étant entretenu par un signal dynamique de fréquence déterminée,
- un deuxième aiguilleur logique commandant les commutateurs, et étant entretenu par un signal dynamique de fréquence déterminée,
- un troisième aiguilleur logique commandant l'activation du signal modulé de commande du moteur.

Dans un mode de réalisation de l'invention, le moteur peut être un moteur de type sans balai à trois enroulements, le commutateur supérieur et le commutateur inférieur étant chacun formés par 3 transistors à effet de champ associés respectivement à chaque enroulement du moteur.

Dans un mode de réalisation de l'invention, le dispositif de surveillance et de commande peut être caractérisé en ce que le signal logique synthétique est en outre conditionné par des résultats logiques de tests de bon fonctionnement des modules formant le dispositif de surveillance et de commande.

Dans un mode de réalisation de l'invention, le dispositif de surveillance et de commande peut être caractérisé en ce que le gel ou l'inhibition de l'actionneur est également commandé par des signaux logiques d'inhibition issus du système de gestion de vol.

Dans un mode de réalisation de l'invention, le dispositif de surveillance et de commande peut être caractérisé en ce que le module de commande et le module de surveillance sont mis en oeuvre dans au moins un circuit logique programmable.

Dans un mode de réalisation de l'invention, le dispositif de surveillance et de commande peut être caractérisé en ce que le module de commande est mis en oeuvre dans un premier circuit logique programmable, et le module de surveillance est mis en oeuvre dans un second circuit logique programmable.

Dans un mode de réalisation de l'invention, le module de commande et le module de surveillance peuvent être associés à un même circuit d'alimentation.

Dans un mode de réalisation de l'invention, le module de commande et le module de surveillance peuvent être chacun associés à un circuit dédié d'alimentation.

Dans un mode de réalisation de l'invention, le dispositif de surveillance et de commande peut être caractérisé en ce que le module de commande, le module de surveillance, l'actionneur, les capteurs de position et le module d'alimentation et d'inhibition sont intégrés dans un module physique.

D'autres caractéristiques et avantages de l'invention apparaîtront à la lecture de la description, donnée à titre d'exemple, faite en regard des dessins annexés qui représentent :
- la figure 1, un diagramme fonctionnel illustrant une architecture de dispositif sécurisé selon un exemple de mode de réalisation de la présente invention ;
- la figure 2, un schéma fonctionnel représentant le module d'alimentation et d'inhibition d'un dispositif sécurisé selon un exemple de mode de réalisation de la présente invention,
- la figure 3, un schéma fonctionnel illustrant de manière schématique le détail d'un module de répartition de puissance selon un exemple de mode de réalisation de la présente invention ;
- la figure 4, un schéma fonctionnel illustrant un principe d'inhibition de l'actionneur mis en oeuvre dans un exemple de mode de réalisation de la présente invention.

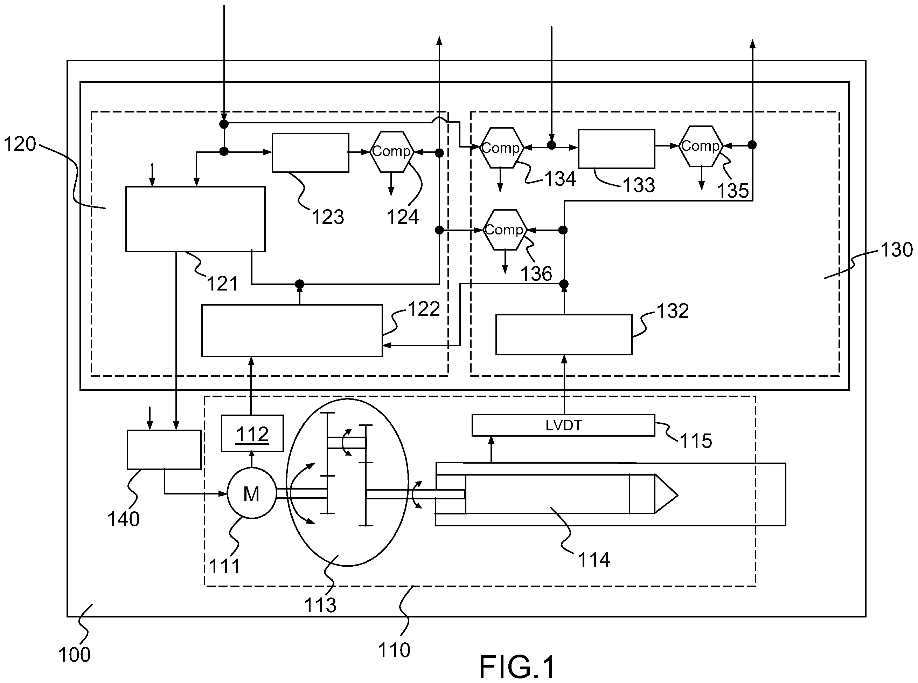

La figure 1 présente un diagramme fonctionnel illustrant une architecture de dispositif sécurisé selon un exemple de mode de réalisation de l'invention.

En référence à la figure 1, un dispositif sécurisé 100 comprend un actionneur série 110, un module de commande 120, un module de surveillance 130, un module d'alimentation et d'inhibition 140.

Dans l'exemple illustré par la figure, l'actionneur série 110 comprend un moteur 111 associé à un premier capteur de position 112. L'arbre du moteur 111 peut être relié à un réducteur 113, dont l'arbre de sortie peut entraîner en translation un dispositif de vis sans fin 114 dont la partie mobile ou "piston" peut être directement reliée à un organe de conduite de l'aéronef, non représenté sur la figure. La vis sans fin 114 peut être associée à un second capteur de position 115.

Le module d'alimentation et d'inhibition 140 gère les alimentations de basses tensions des différents modules électroniques, mais aussi l'alimentation du moteur 111, des capteurs de position 112, 115, ainsi que les mesures de courant telles que la mesure du courant d'alimentation du moteur 111. Le module d'alimentation et d'inhibition 140 gère en outre le gel ou l'inhibition du dispositif sécurisé 100, en cas de défaillances détectées.

Dans l'exemple illustré par la figure, le module de commande 120 comprend un module d'actionnement 121, un premier module de traitement de position 122, un premier module de simulation 123, et un premier comparateur 124. Le module de surveillance 130 comprend un second module de traitement de position 132, un deuxième module de simulation 133, un deuxième comparateur 134, un troisième comparateur 135 et un quatrième comparateur 136.

Le module de commande 120 permet de délivrer les commandes électriques du moteur 111 pour le déplacement de l'actionneur série 110, en fonction de signaux reçus par une chaîne de pilotage située en amont, et comprenant par exemple un système de pilote automatique. Dans un mode de réalisation de l'invention, le module de commande 120 peut recevoir des signaux en retour, représentatifs de la position du moteur 111 ; le moteur 111 peut en effet être un moteur de type moteur sans balai, communément désigné selon la terminologie anglo-saxonne "brushless". De tels moteurs sont habituellement équipés de capteurs à effet Hall, permettant de fournir une information sur le positionnement en rotation du rotor de ce dernier. D'une manière typique, des moteurs sans balai sont équipés de trois enroulements, et partant de trois capteurs à effet Hall. Le premier module de traitement de position 122 réalise la conversion des signaux en provenance des capteurs à effet Hall 112, en un signal représentatif de la position de l'actionneur série 110. Ce signal est notamment envoyé au module d'actionnement 121, ainsi qu'à un système de gestion de vol ; dans l'exemple où l'aéronef considéré est un hélicoptère, un tel système de gestion de vol est habituellement désigné par le sigle FCM, pour l'expression "Flight Control Management". Il est à noter que les messages de commande reçus directement de la part du pilote et/ou du système de pilotage automatique, sont envoyés au module d'actionnement 121.

En parallèle, le module de surveillance 130 reçoit des données en provenance du second capteur de position 115. Ces données sont traitées par le second module de traitement de position 132 ; un signal représentatif de la position de l'actionneur 110 est alors notamment envoyé vers le FCM. Dans un exemple de mode de réalisation de l'invention, le second capteur de position 115 peut être un capteur de type LVDT.

Il est également possible d'utiliser une redondance comprenant deux capteurs de position de type LVDT par exemple, afin d'assurer un fonctionnement, même en cas de défaillance de l'un des deux capteurs. Il est à observer qu'un avantage procuré par la structure décrite ci-dessus réside dans le fait qu'un seul capteur de position de type LVDT est nécessaire, la redondance étant assurée par l'usage du premier capteur de position, de type capteur à effet Hall, sachant que de tels capteurs sont communément intégrés dans des moteurs de type brushless. Dans un système sécurisé, l'usage d'une redondance de capteurs de types différents est particulièrement avantageux.

Il est cependant à remarquer que l'information de position fournie par les capteurs à effet Hall est une information relative. Pour pallier ce problème, l'invention propose avantageusement d'initialiser les données de position de l'actionneur 110 telles qu'interprétées par le premier module de traitement de position 122 sur la base des informations fournies par les capteurs à effet Hall. A cette fin, il est possible de procéder à une initialisation de ces données, par les données de position de l'actionneur 110 calculées par le second module de traitement de position 132. Afin que cette initialisation ne remette pas en cause la sécurité du dispositif, il peut être envisagé que celle-ci ne soit réalisée qu'une seule fois, par exemple à la mise en route du système. L'initialisation peut être produite par la communication d'un message d'initialisation entre le second module de traitement de position 132 et le premier module de traitement de position 122. Pour la suite, même dans le cas d'un diagnostic de défaillance d'un quelconque module, aucune information de ce type n'est communiquée entre les modules de traitement de position 132 et 122.

Selon un mode de réalisation de l'invention, les comparateurs 124, 134, 135, 136 permettent d'assurer une inhibition temporaire ou bien une inhibition définitive de l'actionneur 110, en cas de défaillance ; dans certains cas de défaillance détectée, un freinage de l'actionneur peut être commandé. Un comparateur 124, 134, 135, 136 permet de vérifier la cohérence des deux signaux qui lui sont appliqués en entrée, c'est-à-dire de vérifier que les deux signaux se trouvent dans une plage de valeur déterminée. Un comparateur 124, 134, 135, 136 fournit par exemple en sortie, un signal booléen. La sortie d'un comparateur passe par exemple d'un niveau logique à l'autre, si la différence entre les signaux appliqués en entrée, est supérieure à une valeur de seuil déterminée. La configuration particulière des comparateurs offre une redondance permettant d'assurer l'inhibition quel que soit le mode de défaillance.

Le premier comparateur 124 appartient au module de commande 120. Le premier comparateur 124 vérifie la cohérence de l'information de position de l'actionneur 110 fournie par le premier module de traitement de position 122, avec une information de position d'un actionneur virtuel fournie par le premier module de simulation 123. Le premier module de simulation 123 est un modèle de l'actionneur 110, par exemple simplifié au premier ou au deuxième ordre, et prenant en compte à la fois les caractéristiques dynamiques de l'actionneur 110, mais aussi le niveau mesuré de l'alimentation de puissance de l'actionneur 110, déterminant sur le comportement dynamique de celui-ci, et donc sur son aptitude à suivre une consigne. Le premier comparateur 124 produit par exemple en sortie une information de type booléen, qui passe d'un niveau logique à l'autre en cas de défaillance de l'actionneur 110 lui-même, ou bien du premier capteur de position 112, ou bien du premier module de simulation 123, ou encore du premier comparateur 124 lui-même.

Le deuxième comparateur 134 appartient au module de surveillance 130. Le deuxième comparateur 134 vérifie la cohérence entre le signal de commande reçu par le module de commande 120 depuis le système de gestion de vol, et le signal de commande reçu en parallèle par le module de surveillance 130. Les signaux de commande peuvent par exemple être conformes à des normes internationales, et véhiculés via un bus spécifique, par exemple de type ARINC 429. Ainsi un mode de défaillance provenant de la chaîne de pilotage située en amont du dispositif sécurisé 100 fait passer la sortie logique du deuxième comparateur 134 d'un niveau logique à l'autre, et entraîne par exemple un gel de l'actionneur 110, c'est-à-dire une inhibition temporaire de celui-ci, le temps par exemple que les signaux comparés soient à nouveau diagnostiqués comme cohérents, ou bien que l'actionneur 110 soit recentré ou ré-étalonné par une commande spécifique envoyée directement par le pilote, ou bien automatiquement par le système de gestion de vol de l'aéronef.

Le troisième comparateur 135 appartient au module de surveillance 130. Le troisième comparateur 135 vérifie la cohérence de l'information de position de l'actionneur 110 fournie par le second module de traitement de position 132, avec une information de position d'un actionneur virtuel fournie par le second module de simulation 133. Le second module de simulation 133 est, d'une manière similaire au premier module de simulation 123, un modèle de l'actionneur 110. Le troisième comparateur 135 produit par exemple en sortie une information de type booléen, qui passe d'un niveau logique à l'autre en cas de défaillance de l'actionneur 110 lui-même, ou bien du second capteur de position 115, ou bien du second module de simulation 133, ou encore du troisième comparateur 135 lui-même. Une telle défaillance produit alors une inhibition de l'actionneur 110.

Le quatrième comparateur 136 appartient au module de surveillance 130. Le quatrième comparateur 136 vérifie la cohérence du signal de position de l'actionneur 110 issu du second module de traitement de position 132 et de celui issu du premier module de traitement de position 122. Ainsi une défaillance du premier capteur de position 112, du second capteur de position 115, du premier module de traitement de position 122, du second module de traitement de position 132, ou encore du quatrième comparateur 136 lui-même, entraîne le passage de la sortie logique du quatrième comparateur 136 d'un niveau logique à l'autre, et produit alors une inhibition de l'actionneur 110.

La sortie du premier comparateur 124 peut être combinée avec des niveaux logiques déterminés par d'autres tests de surveillance réalisés au sein du module de commande 120. Par exemple, il peut être réalisé un test du bon comportement du courant de fonctionnement du moteur 111 par rapport à des données chargées à la mise sous tension du dispositif. Un autre test d'arrivée imminente de l'actionneur 110 en butée peut également être réalisé.

De la même manière, les sorties des deuxième, troisième et quatrième comparateurs 134, 135, 136 peuvent être combinées avec des niveaux logiques déterminés par d'autres tests de surveillance réalisés au sein du module de surveillance 130. Par exemple, il peut être réalisé un test de bon comportement de certains paramètres internes à l'actionneur 110, tels que des tensions échantillonnées sur diverses phases du moteur 111. Il peut également être réalisé un test du bon comportement du courant de réseau de l'alimentation principale par rapport à des limites prédéfinies, et pouvant varier dynamiquement avec la tension d'alimentation principale. Il peut également être réalisé un test de bon comportement en température de l'actionneur 110, sur la base d'informations fournies par un capteur de température. Il peut également être réalisé un test de détection de mise en butée de l'actionneur 110, par l'identification d'un sur-courant moteur au-delà d'une position évaluée très proche des butées physiques de l'actionneur 110. Il est à noter qu'en plus de tests de détection de mise en butée de nature essentiellement électrique, il est possible de limiter la course de la vis sans fin 114 par des butées physiques, non représentées sur la figure.

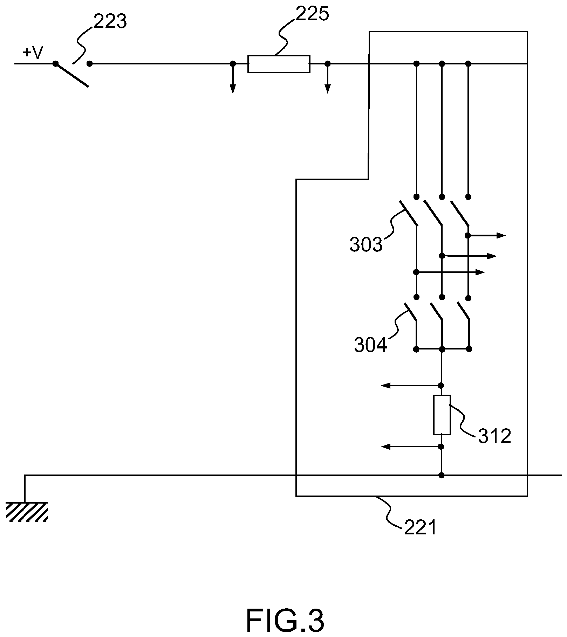

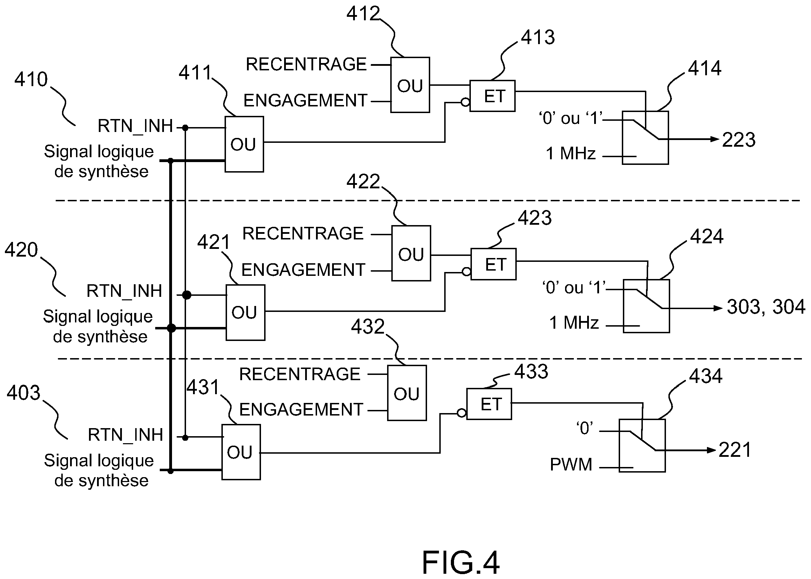

Les données logiques peuvent être ainsi toutes combinées entre elles, et constituer une partie des données d'entrée sur des blocs de sécurité commandant l'inhibition, le freinage ou le gel de l'actionneur 110. La structure de ces blocs de sécurité est explicitée en détails ci-après, en référence aux figures 3 et 4.

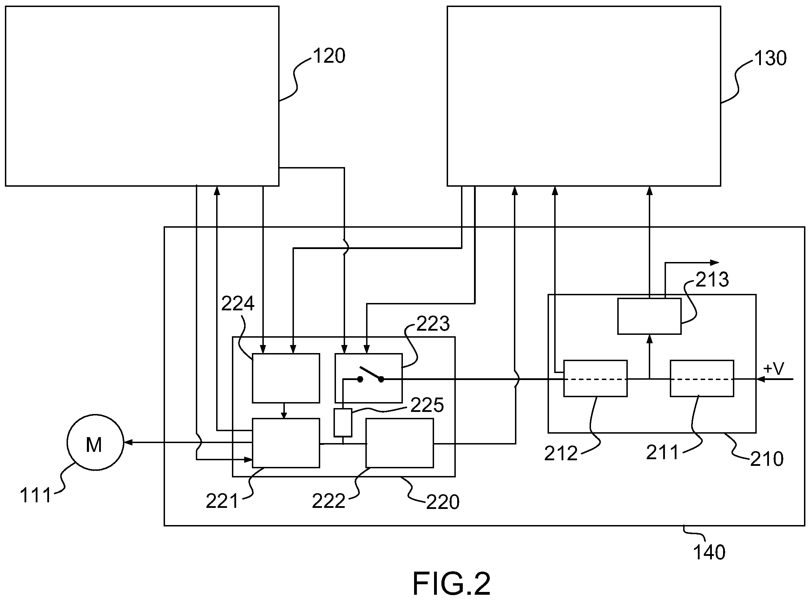

L'inhibition, le freinage ou le gel de l'actionneur 110 peut être réalisé à différents niveaux : notamment, le gel de l'actionneur 110 peut être réalisé par l'ouverture d'un commutateur de commande du module d'actionnement 121, la fonction de commande du moteur 111 étant alors suspendue. Le module d'actionnement 121 peut également, par exemple, être apte à recevoir un message de centrage de l'actionneur, en provenance du pilote ou bien du système de gestion de vol de l'aéronef. L'inhibition de l'actionneur 110 peut être réalisée en amont, au niveau du module d'alimentation et d'inhibition 140. Le module d'alimentation et d'inhibition 140 est décrit en détail ci-après, en référence à la figure 2. Il permet notamment de contrôler la puissance en direction de l'actionneur 110, par exemple via un signal de commande issu du module d'actionnement 121 de type modulation de largeur d'impulsion, communément désignée par le sigle PWM, de l'expression anglo-saxonne "Pulse Width Modulation" ; en outre, le module d'alimentation et d'inhibition 140 est apte à activer des dispositifs de sécurité en fonction de la sortie des quatre comparateurs 124, 134, 134, 136, ainsi que des données logiques issues des différents tests de sécurité précités, de manière à inhiber ou à stopper l'actionneur 110.

La figure 2 présente un schéma fonctionnel représentant le module d'alimentation et d'inhibition d'un dispositif sécurisé selon un exemple de mode de réalisation de la présente invention.

Dans cet exemple de mode de réalisation de l'invention, le module d'alimentation et d'inhibition 140 peut comprendre un module d'alimentation 210, relié à un module de répartition de puissance 220.

Le module d'alimentation 210 est alimenté par une tension continue d'alimentation +V. Une valeur typique de la tension V est comprise entre 20 Volts et 30 Volts. Dans l'exemple illustré par la figure 2, le module d'alimentation 210 comprend un module de protection contre la foudre et de filtrage 211, un module de protection 212 qui peut notamment comprendre un dispositif de protection de polarité inversée, par exemple une diode et/ou un circuit limiteur de courant d'appel, et un module de conversion de tension continue, ou module de conversion "DC-DC" 213. La tension d'alimentation V est appliquée en entrée du module de protection contre la foudre et de filtrage 211. Le signal ainsi filtré peut être envoyé vers le module de conversion DC-DC 213, dont la fonction est de produire les tensions de valeurs diverses, requises par exemple pour l'alimentation des divers modules électroniques constituant le dispositif sécurisé, des différents capteurs de position, des capteurs additionnels reliés au module de surveillance 130, tels que des capteurs de température, etc. Le module de conversion DC-DC 213 peut également comprendre un convertisseur élévateur et/ou des pompes à charges, aptes à produire des tensions des tensions plus élevées que la tension d'alimentation (par exemple pour la commande de l'alimentation du moteur), ou bien des tensions de valeurs intermédiaires. Le module de conversion DC-DC 213 peut également comprendre un dispositif de stockage d'énergie, apte à alimenter les divers modules électroniques en cas de panne de l'alimentation principale, par exemple. La tension d'alimentation +V est dirigée au module de répartition de puissance 220.

Le module de répartition 220 peut comprendre un pont de puissance 221, un module de mesure de tension 222, un rupteur de puissance 223, un premier module de mesure de courant 225 et un module de freinage 224. Le pont de puissance 221 est décrit en détail ci-après en référence à la figure 3. La valeur du courant mesuré par le premier module de mesure de courant 225 peut par exemple être utile au module de protection 212 pour l'enclenchement éventuel du circuit limiteur de courant d'appel.

Le rupteur de puissance 223 peut également recevoir cette information du premier module de mesure de courant 225, et agir directement comme limiteur de courant d'appel à la mise en oeuvre du dispositif de surveillance et de commande 100.

La figure 3 présente un schéma fonctionnel illustrant de manière schématique le détail d'un pont de puissance selon un exemple de mode de réalisation de la présente invention.

Dans cet exemple de mode de réalisation de l'invention, le rupteur de puissance 223 peut être relié à une ligne portée à la tension d'alimentation +V, et monté en série avec le premier module de mesure de courant 225, qui peut être une résistance. En aval du premier module de mesure de courant 225 se situe le pont de puissance 221 à 6 commutateurs, par exemple de type transistors hacheurs. Le pont de puissance 221 comprend trois commutateurs supérieurs 303 et trois commutateurs inférieurs 304. Un second module de mesure de courant 312 peut être disposé en aval des commutateurs 303, 304. Le second module de mesure de courant 312 peut par exemple être une résistance.

Les commutateurs supérieurs 303 du pont de puissance 221 peuvent être simultanément commandés ouverts en situation de panne et redonder de ce fait la même fonction attendue de rupture de puissance du rupteur de puissance 223, placé en amont sur la ligne d'alimentation. La mise en série de ces deux niveaux d'interrupteurs de puissance formés par le rupteur de puissance 223 et les trois commutateurs supérieurs 303 permet de satisfaire un haut niveau de sécurité. Les commutateurs 303, 304 peuvent par exemple être des transistors de type transistors à effet de champ, communément désignés par l'acronyme MOSFET.

Dans un exemple de mode de réalisation de l'invention, les commutateurs 303, 304 peuvent être commandés passants uniquement en la présence d'un signal multivibrateur à sûreté intégrée d'une fréquence intermédiaire, par exemple de 1 MHz, entretenu par un des blocs de sécurité précités, en référence à la figure 1, et décrits en détails ci-après en référence à la figure 4. A la disparition de ce signal d'entretien, l'entretien en énergie de l'actionneur 110 est coupé via les trois commutateurs supérieurs 303, et les 3 commutateurs inférieurs 304 du pont de puissance 221 composant le bloc 304 sont commandés passants, assurant un freinage efficace du moteur 110, ce dernier voyant alors ses 3 enroulements en court-circuit. Le freinage rapide ainsi disponible participe à la sécurité générale de l'actionneur 110.

Le premier module de mesure de courant 225 précité, en référence à la figure 2, en donnant une indication du courant moyen global de l'actionneur sur la ligne +V, vient compléter la surveillance en courant effectuée au travers du second module de mesure de courant 312 disposé dans le pied du pont de puissance 221 Après un traitement adapté, le second module de mesure de courant 312 permet de disposer d'une image des courants de phase du moteur 111 et donc de son couple, et est utilisé pour le bon contrôle du fonctionnement du moteur 111. L'information de courant ainsi disponible est aussi surveillée pour détecter d'éventuelles pannes ou dysfonctionnements de l'actionneur 110, ainsi qu'il est décrit précédemment en référence à la figure 1.

La figure 4 présente un schéma fonctionnel illustrant un principe d'inhibition de l'actionneur mis en oeuvre dans un exemple de mode de réalisation de la présente invention.

Un premier bloc de sécurité 410 est lié est lié au rupteur de puissance 223 précité, en référence à la figure 3. Un second bloc de sécurité 420 est lié aux commutateurs supérieurs et inférieurs 303 et 304 précités, en référence à la figure 3. Un troisième bloc de sécurité 430 est lié au bloc d'actionnement 121 précité, en référence à la figure 1.

Dans un exemple de mode de réalisation, le premier bloc de sécurité 410 comprend un premier opérateur logique de type "OU" 411 attaqué :
- par l'ensemble des signaux de surveillance des modules de commande 120 et de surveillance 130, déterminé par les sorties des quatre comparateurs 124, 134, 135, 136 et des bits issus des différents tests additionnels réalisés dans le module de commande 120 et le module de surveillance 130, et cités précédemment en référence à la figure 1
- un signal logique d'inhibition RTN_INH, duplication logique de l'une ou l'autre commande externe d'inhibition activées parallèlement soit par les FCM, soit par le pilote et agissant directement au plus bas niveau sur le rupteur de puissance 223 ou du circuit d'autorisation du pont de puissance 221 fournissant l'énergie à l'actionneur 110.
La sortie du premier opérateur logique 411 est inversée et attaque l'entrée d'un troisième opérateur logique de type "ET" 413, l'autre entrée du troisième opérateur logique 413 étant attaquée par la sortie logique d'un deuxième opérateur logique de type "OU" 412, lui-même attaqué par des signaux logiques issus de commandes respectivement de recentrage de l'actionneur 110, et d'engagement de ce dernier L'engagement correspond à une validation logicielle de l'activation de mouvement de l'actionneur, par exemple via un bit spécifique dans un mot de commande de type Arinc 429. Par l'intermédiaire d'un premier aiguilleur logique 414, la sortie du quatrième opérateur logique 413 conditionne l'ouverture du rupteur de puissance 223. Le premier aiguilleur logique 414 correspondant à l'état « 1 » du quatrième opérateur logique 413 correspond au fonctionnement nominal d'entretien d'une commande active à sûreté intégrée, par exemple un signal dynamique de fréquence 1 MHz), du rupteur de puissance 223 commandé alors passant. L'état « 0 » correspond à une panne pour laquelle l'entrée du premier aiguilleur logique 414 est à l'état statique « 0 » ou « 1 »

D'une manière similaire, le deuxième bloc de sécurité 420 comprend un quatrième opérateur logique de type "OU" 421 attaqué :
- par l'ensemble des signaux de surveillance des modules de commande 120 et de surveillance 130, déterminé par les sorties des quatre comparateurs 124, 134, 135, 136 et des bits issus des différents tests additionnels réalisés dans le module de commande 120 et le module de surveillance 130, et cités précédemment en référence à la figure 1
- un signal logique d'inhibition RTN_INH duplication logique de l'une ou l'autre commande externe d'inhibition issues du système FCM agissant directement au plus bas niveau sur le rupteur de puissance 223 ou du circuit d'autorisation du pont de puissance 221 fournissant l'énergie à l'actionneur 110.
La sortie du quatrième opérateur logique 421 est inversée et attaque l'entrée d'un sixième opérateur logique de type "ET" 423, l'autre entrée du sixième opérateur logique 423 étant attaquée par la sortie logique d'un cinquième opérateur logique de type "OU" 422, lui-même attaqué par des signaux logiques issus de commandes respectivement de recentrage de l'actionneur 110, et d'engagement de ce dernier.
Par l'intermédiaire d'un deuxième aiguilleur logique 424, la sortie du sixième opérateur logique 423 conditionne l'ouverture des commutateurs de freinage 304. Le deuxième aiguilleur logique 424 correspondant à l'état « 1 » du sixième opérateur logique 423 correspond au fonctionnement nominal d'entretien d'une commande active à sûreté intégrée, par exemple un signal dynamique de fréquence 1 MHz), du pont de puissance 221 commandé alors actif. L'état « 0 » correspond à une panne pour laquelle l'entrée du deuxième aiguilleur logique 424 est à l'état statique « 0 » ou « 1 » : ouvrant de ce fait les 3 commutateurs supérieurs 303 du pont de puissance 221 et commandant passants simultanément les trois commutateurs inférieurs 304 du pont de puissance 221 avec action de freinage associée.

D'une manière similaire, le troisième bloc de sécurité 430 comprend un septième opérateur logique de type "OU" 431 attaqué :
- par l'ensemble des signaux de surveillance des modules de commande 120 et de surveillance 130, déterminé par les sorties des quatre comparateurs 124, 134, 135, 136 et des bits issus des différents tests additionnels réalisés dans le module de commande 120 et le module de surveillance 130, et cités précédemment en référence à la figure 1
- un signal logique d'inhibition RTN_INH duplication logique de l'une ou l'autre commande externe d'inhibition issues du système FCM agissant directement au plus bas niveau sur le rupteur de puissance 223 ou du circuit d'autorisation du pont de puissance 221 fournissant l'énergie à l'actionneur 110.
La sortie du septième opérateur logique 421 est inversée et attaque l'entrée d'un huitième opérateur logique de type "ET" 433, l'autre entrée du sixième opérateur logique 433 étant attaquée par la sortie logique d'un cinquième opérateur logique de type "OU" 422, lui-même attaqué par des signaux logiques issus de commandes respectivement de recentrage de l'actionneur 110, et d'engagement de ce dernier.
Par l'intermédiaire d'un troisième aiguilleur logique 434, la sortie du sixième opérateur logique 423 conditionne l'activation de la fonction PWM assurée par le module d'actionnement 121. Le troisième aiguilleur logique 434 correspondant à l'état « 1 » du sixième opérateur logique 433 correspond au fonctionnement nominal d'une commande PWM commandant les 6 commutateurs 303, 304 du pont de puissance 221. L'état « 0 » correspond à une panne pour laquelle l'entrée du troisième aiguilleur logique 434 est à l'état statique « 0 » arrêtant toute commande PWM en direction des six commutateurs 303, 304 du pont de puissance 221.

Il est à noter que les modules de commande et de surveillance 120, 130 précités, peuvent être tous deux mis en oeuvre dans une carte électronique, par exemple dans un circuit logique programmable de type FPGA, selon le sigle désignant le terme anglo-saxon "Field Programmable Gâte Array", le FPGA étant alimenté par un bloc d'alimentation. Néanmoins, dans le but d'offrir une robustesse encore renforcée, il est notamment possible de mettre en oeuvre les modules dans deux FPGA séparés, chaque module FPGA ayant par exemple sa propre horloge. Il est également possible de dupliquer les alimentations afin que chaque FPGA ait son propre bloc d'alimentation. Dans un mode de réalisation de l'invention, un actionneur peut être conditionné dans un unique module physique comprenant la ou les alimentation(s), la ou les carte(s) électronique(s), ainsi que l'actionneur série à proprement parler.

## Revendications

1. Dispositif de surveillance et de commande (100) pour actionneur (110) d'aéronef, comprenant :
• un module de commande (120), délivrant des signaux de commande de l'actionneur (110) et des signaux de position de l'actionneur (110) déterminés respectivement en fonction de messages de commande reçus d'un système de gestion de pilotage de l'aéronef, et d'au moins un premier capteur de position (112) fournissant des informations relatives à la position de l'actionneur (110),
• un module de surveillance (130), délivrant des signaux de position de l'actionneur (110) et recevant simultanément les messages de commande reçus du système de gestion de pilotage de l'aéronef, et des informations relatives à la position de l'actionneur (110) fournies par au moins un second capteur de position (115),
lesdits modules de commande (120) et de surveillance (130) étant aptes à apprécier la cohérence des signaux y traités et à commander en conséquence un module d'alimentation et d'inhibition (140) de l'actionneur (110), le dispositif de surveillance et de commande (100) étant **caractérisé en ce que** l'actionneur (110) est mu par un moteur électrique sans balais (111), le premier capteur de position (112) étant un capteur de type à effet Hall fournissant une information sur le positionnement en rotation du rotor du moteur (111), la position de l'actionneur étant déterminée par le module de commande (120) sur la base d'une donnée de position initiale fournie par le module de surveillance (130).

2. Dispositif de surveillance et de commande (100) selon la revendication 1, **caractérisé en ce que** la donnée de position initiale est fournie au module de commande (120) à la mise en route du dispositif de surveillance et de commande pour actionneur (110).

3. Dispositif de surveillance et de commande (100) selon l'une quelconque des revendications précédentes, **caractérisé en ce que** le second capteur de position est un capteur de position de l'actionneur (110).

4. Dispositif de surveillance et de commande (100) selon l'une quelconque des revendications précédentes, **caractérisé en ce que** le module de commande (100) comprend :
• un module d'actionnement (121) commandant l'actionneur (110) via le module d'alimentation et d'inhibition (140),
• un premier module de traitement de position (122) traitant les données provenant du premier capteur de position (112) et générant et envoyant au module d'actionnement (121), un premier signal représentatif de la position de l'actionneur (110).

5. Dispositif de surveillance et de commande (100) selon l'une quelconque des revendications précédentes, **caractérisé en ce que** le module de commande (120) comprend un premier module de simulation (123) recevant les messages de commande reçus du système de gestion de pilotage de l'aéronef, et simulant le comportement de l'actionneur (110), générant un premier signal de position virtuelle de l'actionneur (110).

6. Dispositif de surveillance et de commande (100) selon l'une quelconque des revendications précédentes, **caractérisé en ce que** le module de surveillance (130) comprend un second module de traitement de position (132) traitant les données provenant du second capteur de position (115) et générant un second signal représentatif de la position de l'actionneur.

7. Dispositif de surveillance et de commande (100) selon l'une quelconque des revendications précédentes, **caractérisé en ce que** le module de surveillance (130) comprend un second module de simulation (133) recevant les messages de commande reçus du système de gestion de pilotage de l'aéronef, et simulant le comportement de l'actionneur (110), générant un second signal de position virtuelle de l'actionneur (110).

8. Dispositif de surveillance et de commande (100) selon l'une quelconque des revendications 5 à 7, **caractérisé en ce qu'**il comprend un premier comparateur (124) dont la sortie passe d'un niveau logique nominal à l'autre si le premier signal de position virtuelle de l'actionneur (110) diffère du premier signal représentatif de la position de l'actionneur (110) d'une valeur supérieure à un premier seuil déterminé.

9. Dispositif de surveillance et de commande (100) selon l'une quelconque des revendications précédentes, **caractérisé en ce qu'**il comprend un deuxième comparateur (134) dont la sortie passe d'un niveau logique nominal à l'autre si un signal de commande reçu par le module de commande (120) diffère du signal de commande reçu simultanément par le module de surveillance (130) d'une valeur supérieure à un deuxième seuil déterminé.

10. Dispositif de surveillance et de commande (100) selon l'une quelconque des revendications 6 à 9, **caractérisé en ce qu'**il comprend un troisième comparateur (135) dont la sortie passe d'un niveau logique nominal à l'autre si le second signal de position virtuelle de l'actionneur (110) diffère du second signal représentatif de la position de l'actionneur (110) d'une valeur supérieure à un troisième seuil déterminé.

11. Dispositif de surveillance et de commande (100) selon l'une quelconque des revendications 4 à 10, **caractérisé en ce qu'**il comprend un quatrième comparateur (136) dont la sortie passe d'un niveau logique nominal à l'autre si le premier signal représentatif de la position de l'actionneur (110) diffère du second signal représentatif de la position de l'actionneur (110) d'une valeur supérieure à un quatrième seuil déterminé.

12. Dispositif de surveillance et de commande (100) selon la revendication 11, **caractérisé en ce que** le module d'alimentation et d'inhibition (140) comprend :
• un module d'alimentation (210) alimenté par une tension d'alimentation principale, et traitant le signal d'alimentation pour générer les signaux d'alimentation des différents modules formant le dispositif de surveillance et de commande (100);
• un module de répartition de puissance (220), générant à partir des informations fournies par le module d'actionnement (121) un signal modulé pour la commande du moteur (111), et assurant le gel ou l'inhibition de l'actionneur (110) en cas de défaillance, détectée à partir d'un signal logique synthétique dépendant au moins du niveau logique des sorties des comparateurs (124, 134, 135, 136).

13. Dispositif de surveillance et de commande (100) selon la revendication 12, **caractérisé en ce que** le module d'alimentation et d'inhibition (140) comprend sur la ligne d'alimentation principale, un rupteur de puissance (223), un premier dispositif de mesure de courant (225), en série duquel est disposé un pont de puissance (221), le pont de puissance (221) comprenant un commutateur supérieur (303) en série avec un commutateur inférieur (304) et générant le signal modulé de commande du moteur (111), le rupteur de puissance (223) et lesdits commutateurs (303, 304) étant commandés par ledit signal logique synthétique.

14. Dispositif de surveillance et de commande (100) selon la revendication 13, **caractérisé en ce que** la commande du rupteur de puissance (223), des commutateurs (303, 304) et du moteur (111) est réalisée par l'intermédiaire d'aiguilleurs logiques :
• un premier aiguilleur logique (414) commandant le rupteur de puissance (223), et étant entretenu par un signal dynamique de fréquence déterminée,
• un deuxième aiguilleur logique (424) commandant les commutateurs (303, 304), et étant entretenu par un signal dynamique de fréquence déterminée,
• un troisième aiguilleur logique (434) commandant l'activation du signal modulé de commande du moteur (111).

15. Dispositif de surveillance et de commande (100) selon l'une quelconque des revendications 12 à 14, **caractérisé en ce que** le signal logique synthétique est en outre conditionné par des résultats logiques de tests de bon fonctionnement des modules formant le dispositif de surveillance et de commande (100).

16. Dispositif de surveillance et de commande (100) selon l'une quelconque des revendications précédentes, **caractérisé en ce que** le module de commande (120) et le module de surveillance (130) sont mis en oeuvre dans au moins un circuit logique programmable, les modules de commande et de surveillance (120, 130) étant associés à un même circuit d'alimentation ou étant chacun associés à un circuit d'alimentation.

## Patentansprüche

1. Vorrichtung zur Überwachung und Steuerung (100) für ein Stellglied (110) eines Luftfahrzeugs, welche Folgendes beinhaltet:
• ein Steuerungsmodul (120), welches Steuersignale des Stellgliedes (110) und Positionssignale des Stellgliedes (110) abgibt, welche jeweils angesichts von Steuermeldungen bestimmt werden, welche von einem Flugsteuerungs-Managementsystem des Luftfahrzeugs empfangen werden, und von mindestens einem ersten Positionssensor (112), welcher Informationen zur Position des Stellgliedes (110) bereitstellt,
• ein Überwachungsmodul (130), welches Positionssignale des Stellgliedes (110) abgibt und gleichzeitig die vom Flugsteuerungs-Managementsystem des Luftfahrzeugs empfangenen Meldungen und Informationen zur Position des Stellgliedes (110) erhält, welche durch mindestens einen zweiten Positionssensor (115) bereitgestellt werden,
wobei die Steuerungs- (120) und Überwachungsmodule (130) in der Lage sind, die Kohärenz der hierin bearbeiteten Signale zu beurteilen und entsprechend ein Speisungs- und Hemm-Modul (140) des Stellgliedes (110) zu steuern, wobei die Vorrichtung zur Überwachung und Steuerung (100) **dadurch gekennzeichnet ist, dass** das Stellglied (110) durch einen bürstenlosen Elektromotor (111) bewegt wird, der erste Positionssensor (112) ein Sensor vom Typ mit Hall-Effekt ist, welcher eine Information zur Rotationspositionierung des Rotors des Motors (111) bereitstellt, wobei die Position des Stellgliedes durch das Steuerungsmodul (120) auf der Grundlage einer anfänglichen Positions-Information bestimmt wird, welche durch das Überwachungsmodul (130) bereitgestellt wird.

2. Vorrichtung zur Überwachung und Steuerung (100) nach Anspruch 1, **dadurch gekennzeichnet, dass** die anfängliche Positions-Information dem Steuerungsmodul (120) bei der Inbetriebsetzung der Vorrichtung zur Überwachung und Steuerung für ein Stellglied (110) bereitgestellt wird.

3. Vorrichtung zur Überwachung und Steuerung (100) nach einem der vorhergehenden Ansprüche, **dadurch gekennzeichnet, dass** der zweite Positionssensor ein Positionssensor des Stellgliedes (110) ist.

4. Vorrichtung zur Überwachung und Steuerung (100) nach einem der vorhergehenden Ansprüche, **dadurch gekennzeichnet, dass** das Steuerungsmodul (100) Folgendes beinhaltet:
• ein Betätigungsmodul (121), welches das Stellglied (110) über das Speisungs- und Hemm-Modul (140) steuert,
• ein erstes Positionsbearbeitungsmodul (122), welches die dem ersten Positionssensor (112) entstammenden Daten bearbeitet und ein erstes Signal, welches die Position des Stellgliedes (110) darstellt, erzeugt und an das Betätigungsmodul (121) sendet.

5. Vorrichtung zur Überwachung und Steuerung (100) nach einem der vorhergehenden Ansprüche, **dadurch gekennzeichnet, dass** das Steuerungsmodul (120) ein erstes Simulationsmodul (123) beinhaltet, welches die vom Flugsteuerungs-Managementsystem des Luftfahrzeugs empfangenen Steuermeldungen erhält und das Verhalten des Stellgliedes (110) simuliert, ein erstes virtuelles Positionssignal des Stellgliedes (110) erzeugend.

6. Vorrichtung zur Überwachung und Steuerung (100) nach einem der vorhergehenden Ansprüche, **dadurch gekennzeichnet, dass** das Überwachungsmodul (130) ein zweites Positionsbearbeitungsmodul (132) beinhaltet, welches die aus dem zweiten Positionssensor (115) stammenden Daten bearbeitet und ein zweites Signal erzeugt, welches die Position des Stellgliedes darstellt.

7. Vorrichtung zur Überwachung und Steuerung (100) nach einem der vorhergehenden Ansprüche, **dadurch gekennzeichnet, dass** das Überwachungsmodul (130) ein zweites Simulationsmodul (133) beinhaltet, welches die vom Flugsteuerungs-Managementsystem des Luftfahrzeugs empfangenen Steuermeldungen erhält und das Verhalten des Stellgliedes (110) simuliert, ein zweites virtuelles Positionssignal des Stellgliedes (110) erzeugend.

8. Vorrichtung zur Überwachung und Steuerung (100) nach einem der Ansprüche 5 bis 7, **dadurch gekennzeichnet, dass** sie einen ersten Komparator (124) beinhaltet, dessen Ausgang von einem logischen Nennpegel zum anderen umschaltet, wenn das erste virtuelle Positionssignal des Stellgliedes (110) vom ersten Signal, welches die Position des Stellgliedes (110) darstellt, um einen Wert abweicht, welcher einen bestimmten ersten Grenzwert überschreitet.

9. Vorrichtung zur Überwachung und Steuerung (100) nach einem der vorhergehenden Ansprüche, **dadurch gekennzeichnet, dass** sie einen zweiten Komparator (134) beinhaltet, dessen Ausgang von einem logischen Nennpegel zum anderen umschaltet, wenn ein vom Steuerungsmodul (120) empfangenes Steuersignal vom gleichzeitig vom Überwachungsmodul (130) empfangenen Signal um einen Wert abweicht, welcher einen bestimmten zweiten Grenzwert überschreitet.

10. Vorrichtung zur Überwachung und Steuerung (100) nach einem der Ansprüche 6 bis 9, **dadurch gekennzeichnet, dass** sie einen dritten Komparator (135) beinhaltet, dessen Ausgang von einem logischen Nennpegel zum anderen umschaltet, wenn das zweite virtuelle Positionssignal des Stellgliedes (110) vom zweiten Signal, welches die Position des Stellgliedes (110) darstellt, um einen Wert abweicht, welcher einen bestimmten dritten Grenzwert überschreitet.

11. Vorrichtung zur Überwachung und Steuerung (100) nach einem der Ansprüche 4 bis 10, **dadurch gekennzeichnet, dass** sie einen vierten Komparator (136) beinhaltet, dessen Ausgang von einem logischen Nennpegel zum anderen umschaltet, wenn das erste Signal, welches die Position des Stellgliedes (110) darstellt, vom zweiten Signal, welches die Position des Stellgliedes (110) darstellt, um einen Wert abweicht, welcher einen bestimmten vierten Grenzwert überschreitet.

12. Vorrichtung zur Überwachung und Steuerung (100) nach Anspruch 11, **dadurch gekennzeichnet, dass** das Speisungs- und Hemm-Modul (140) Folgendes beinhaltet:
• ein Speisungsmodul (210), welches durch eine Hauptspeisungsspannung gespeist wird und das Speisungssignal bearbeitet, um die Speisungssignale der unterschiedlichen Module zu erzeugen, welche die Vorrichtung zur Überwachung und Steuerung (100) bilden;
• ein Leistungs-Verteilungsmodul (220), welches anhand der durch das Betätigungsmodul (121) bereitgestellten Informationen ein moduliertes Signal zur Steuerung des Motors (111) erzeugt, und das Einfrieren oder Hemmen des Stellgliedes (110) bei einem Ausfall gewährleistet, welcher anhand eines synthetischen, logischen Signals erkannt wird, welches mindestens von dem Logikpegel der Ausgänge der Komparatoren (124, 134, 135, 136) abhängt.

13. Vorrichtung zur Überwachung und Steuerung (100) nach Anspruch 12, **dadurch gekennzeichnet, dass** das Speisungs- und Hemm-Modul (140) an der Hauptspeisungsleitung einen Leistungsunterbrecher (223), eine erste Strommessvorrichtung (225), und in Reihenschaltung damit, eine Leistungsbrückenschaltung (221) beinhaltet, wobei die Leistungsbrückenschaltung (221) einen oberen Umschalter (303) in Reihenschaltung mit einem unteren Umschalter (304) besitzt und das modulierte Signal zur Steuerung des Motors (111) erzeugt, wobei der Leistungsunterbrecher (223) und die Umschalter (303, 304) durch das synthetische, logische Signal gesteuert werden.

14. Vorrichtung zur Überwachung und Steuerung (100) nach Anspruch 13, **dadurch gekennzeichnet, dass** die Steuerung des Leistungsunterbrechers (223), der Umschalter (303, 304) und des Motors (111) durch Vermittlung von logischen Weichen erfolgt:
• einer ersten logischen Weiche (414), welche den Leistungsunterbrecher (223) steuert und durch ein dynamisches Signal einer bestimmten Frequenz unterhalten wird,
• einer zweiten logischen Weiche (424), welche die Umschalter (303, 304) steuert und durch ein dynamisches Signal einer bestimmten Frequenz unterhalten wird,
• einer dritten logischen Weiche (434), welche die Aktivierung des modulierten Signal zur Steuerung des Motors (111) steuert.

15. Vorrichtung zur Überwachung und Steuerung (100) nach einem der Ansprüche 12 bis 14, **dadurch gekennzeichnet, dass** das synthetische, logische Signal zudem durch die logischen Ergebnisse von Tests auf einwandfreie Funktion der Module bedingt wird, welche die Vorrichtung zur Überwachung und Steuerung (100) bilden.

16. Vorrichtung zur Überwachung und Steuerung (100) nach einem der vorhergehenden Ansprüche, **dadurch gekennzeichnet, dass** das Steuerungsmodul (120) und das Überwachungsmodul (130) in mindestens einem programmierbaren, logischen Schaltkreis umgesetzt werden, wobei das Steuerungsmodul und das Überwachungsmodul (120, 130) mit einem gleichen Speisungsschaltkreis assoziiert sind, oder jeweils einzeln mit einem Speisungsschaltkreis assoziiert sind.

## Claims

1. Monitoring and control device (100) for an aircraft actuator (110), comprising:
• a control module (120), delivering control signals of the actuator (110) and position signals of the actuator (110) respectively determined according to control messages received from a piloting management system of the aircraft, and of at least one first position sensor (112) supplying information concerning the position of the actuator (110),
• a monitoring module (130), delivering actuator (110) position signals and simultaneously receiving the control messages received from the piloting management system of the aircraft, and information relating to the position of the actuator (110) supplied by at least one second position sensor (115),
said control (120) and monitoring (130) modules being capable of assessing the consistency of the signals processed therein and of controlling accordingly an actuator power supply and disabling module (140) of the actuator (110), said monitoring and control device (100) being **characterized in that** the actuator (110) is driven by an electric brushless-type motor (111), the first position sensor (112) being a Hall effect type sensor supplying information concerning the rotational positioning of the rotor of the motor (111), the position of the actuator being determined by the control module (120) based on an initial position information supplied by the monitoring module (130).

2. Monitoring and control device (100) according to claim 1, **characterized in that** the initial position information is supplied to the control module (120) when the monitoring and control device for an actuator (110) is started up.

3. Monitoring and control device (100) according to any one of the preceding claims, **characterized in that** the second position sensor is an actuator (110) position sensor.

4. Monitoring and control device (100) according to any one of the preceding claims, **characterized in that** the control module (100) comprises:
• an actuation module (121) controlling the actuator (110) via the power supply and disabling module (140),
• a first position processing module (122) processing the data originating from the first position sensor (112) and generating and sending to the actuation module (121) a first signal representative of the position of the actuator (110).

5. Monitoring and control device (100) according to any one of the preceding claims, **characterized in that** the control module (120) comprises a first simulation module (123) receiving the control messages received from the piloting management system of the aircraft, and simulating the behaviour of the actuator (110), generating a first actuator (110) virtual position signal.

6. Monitoring and control device (100) according to any one of the preceding claims, **characterized in that** the monitoring module (130) comprises a second position processing module (132) processing the data originating from the second position sensor (115) and generating a second signal representative of the position of the actuator.

7. Monitoring and control device (100) according to any one of the preceding claims, **characterized in that** the monitoring module (130) comprises a second simulation module (133) receiving the control messages received from the piloting management system of the aircraft, and simulating the behaviour of the actuator (110), generating a second actuator (110) virtual position signal.

8. Monitoring and control device (100) according to any one of claims 5 to 7, **characterized in that** it comprises a first comparator (124), the output of which changes from one nominal logic level to the other if the first actuator (110) virtual position signal differs from the first signal representative of the position of the actuator (110) by a value greater than a first determined threshold.

9. Monitoring and control device (100) according to any one of the preceding claims, **characterized in that** it comprises a second comparator (134), the output of which changes from one nominal logic level to the other if a control signal received by the control module (120) differs from the control signal received simultaneously by the monitoring module (130) by a value greater than a second determined threshold.

10. Monitoring and control device (100) according to any one of claims 6 to 7, **characterized in that** it comprises a third comparator (135), the output of which changes from one nominal logic level to the other if the second actuator (110) virtual position signal differs from the second signal representative of the position of the actuator (110) by a value greater than a third determined threshold.

11. Monitoring and control device (100) according to any one of claims 4 to 10, **characterized in that** it comprises a fourth comparator (136), the output of which changes from one nominal logic level to the other if the first signal representative of the position of the actuator (110) differs from the second signal representative of the position of the actuator (110) by a value greater than a fourth determined threshold.

12. Monitoring and control device (100) according to claim 11, **characterized in that** the power supply and disabling module (140) comprises:
• a power supply module (210) powered by a main power supply voltage, and processing the power supply signal to generate the power supply signals for the various modules forming the monitoring and control device (100);
• a power distribution module (220), generating, on the basis of the information supplied by the actuation module (121), a modulated signal to control the motor (111), and responsible for freezing or disabling the actuator (110) in the event of failure, detected on the basis of a synthetic logic signal dependent at least on the logic level of the outputs of the comparators (124, 134, 135, 136).

13. Monitoring and control device (100) according to claim 12, **characterized in that** the power supply and disabling module (140) comprises, on the main power supply line, a power breaker (223), a first current measuring device (225), in series with which is arranged a power bridge (221), the power bridge (221) comprising a top switch (303) in series with a bottom switch (304) and generating the modulated control signal for the motor (111), the power breaker (223) and said switches (303, 304) being controlled by said synthetic logic signal.

14. Monitoring and control device (100) according to claim 13, **characterized in that** the power breaker (223), the switches (303, 304) and the motor (111) are controlled via logic switchers:
• a first logic switcher (414) controlling the power breaker (223), and being maintained by a dynamic signal of determined frequency,
• a second logic switcher (424) controlling the switches (303, 304), and being maintained by a dynamic signal of determined frequency,
• a third logic switcher (434) controlling the activation of the modulated control signal of the motor (111).

15. Monitoring and control device (100) according to any one of claims 12 to 14, **characterized in that** the synthetic logic signal is also conditioned by logic results of correct operation tests on the modules forming the monitoring and control device (100).

16. Monitoring and control device (100) according to any one of the preceding claims, **characterized in that** the control module (120) and the monitoring module (130) are implemented in at least one programmable logic circuit, the control and monitoring modules (120, 130) being associated with one and the same power supply circuit or each being associated with a power supply circuit.
